# EUROPEAN PATENT APPLICATION

(11) **EP 2 740 341 A1**
(43) Date of publication of application: **11.06.2014**
(21) Application number: 13194833.3
(22) Date of filing: 28.11.2013
(51) Int. Cl.: A01B 73/04

(54) **Drawbar apparatus and agricultural implement with such an apparatus**

(30) Priority: 06.12.2012 US 201213706518
(71) Applicant: Deere & Company, Moline, IL 61265-8098 (US)
(72) Inventor: Casper, Robert T, Mingo, IA Iowa 50168 (US); Payne, David A, Urbandale, IA Iowa 50322 (US)
(74) Representative: Reichert, Christian

(57) **Abstract**

A drawbar apparatus (55) for coupling an earth-working tool (130) to a frame (20) of an agricultural implement (10) is disclosed. The drawbar apparatus (55) comprises a drawbar (60) pivotally coupable to a frame (20) and an earth-working tool attachment (65), the earth-working tool attachment (65) comprising a first bracket (70) comprising a first portion (75) and a second portion (80), the second portion (80) pivotally coupled to the drawbar (60); a second bracket (90) comprising a first portion (95) and a second portion (100), the second portion (100) pivotally coupled to the drawbar (60); and a tool support (125) coupled to the first portion (75) of the first bracket (70) and the first portion (95) of the second bracket (90); wherein the tool support (125) is configured to fold relative to the drawbar (60). Further, an agricultural implement (10) with such a drawbar apparatus (55) is disclosed.

## Description

The present disclosure relates to a drawbar apparatus for coupling an earth-working tool to a frame of an agricultural implement. It further relates to an agricultural implement with such drawbar apparatus.

In order to support an earth-working tool on an agricultural implement, agricultural implements commonly include rearwardly-projecting arms. The arms are pivotally mounted to a frame of the agricultural implement and are biased downward by spring structure so that the earth-working tool is engaged with the soil. The spring structure creates a down force on the earth-working tool. The earth-working tool may be pivoted using an adjustable tine support assembly as described in commonly assigned U.S. Patent No. 6,688,405, which is hereby incorporated by reference in its entirety.

One object of the invention is to provide an agricultural machine with improved folding options.

The object will be achieved by the teaching of claim 1. Further advantageous embodiments are described within the subclaims.

Accordingly, the drawbar apparatus of above mentioned type comprises a drawbar which can be pivotally coupled to a frame and an earth-working tool attachment (65), the earth-working tool attachment (65) comprising; a first bracket comprising a first portion and a second portion, the second portion pivotally coupled to the drawbar; a second bracket comprising a first portion and a second portion, the second portion pivotally coupled to the drawbar; and a tool support coupled to the first portion of the first bracket and the first portion of the second bracket; wherein the tool support is configured to fold relative to the drawbar.

In one embodiment, a drawbar apparatus for coupling an earth-working tool to a frame of an agricultural implement is disclosed. The drawbar apparatus comprises a drawbar. The drawbar is pivotally coupled to the frame.

A first bracket comprises a first portion and a second portion. The second portion is pivotally coupled to the drawbar. A second bracket comprises a first portion and a second portion. The second portion is pivotally coupled to the drawbar. A tool support is coupled to the first portion of the first bracket and the first portion of the second bracket. The tool support is configured to fold relative to the drawbar.

In another embodiment, an earth-working tool attachment for coupling to a drawbar of an agricultural implement is disclosed. The earth-working tool attachment comprises a first bracket. The first bracket comprises a first portion and a second portion. A first hinge is coupled to the second portion of the first bracket and the drawbar. A second bracket comprises a first portion and a second portion. A second hinge is coupled to the second portion of the second bracket and the drawbar. A tool support is coupled to the first portion of the first bracket and the first portion of the second bracket. An earth-working tool is coupled to the tool support. The tool support is configured to fold relative to the drawbar.

In yet another embodiment, an agricultural implement is disclosed. The agricultural implement comprises a coupling mechanism for coupling to a vehicle.

A frame is coupled to the coupling mechanism and extends from the coupling mechanism. The frame is adapted to be pulled by the vehicle.

A plurality of wheel assemblies is coupled to the frame. The wheel assemblies support the frame above a surface.

A drawbar apparatus comprises a drawbar that is pivotally coupled to the frame. A first bracket comprises a first portion and a second portion. The second portion is pivotally coupled to the drawbar. A second bracket comprises a first portion and a second portion. The second portion is pivotally coupled to the drawbar. A tool support is coupled to the first portion of the first bracket and the first portion of the second bracket. The tool support is configured to fold relative to the drawbar.
FIG. 1 is a perspective view of an agricultural implement according to one embodiment.
FIG. 2 is a perspective view of a portion of the agricultural implement of FIG. 1, showing the drawbar apparatus in a first position.
FIG. 3 is a zoomed in view of a portion of the agricultural implement of FIG. 1.
FIG. 4 is a partially exploded view of a portion of the agricultural implement of FIG. 1.
FIG. 5 is a perspective view of a portion of the agricultural implement of FIG. 1, showing the drawbar apparatus in a second position.
FIG. 6 is a perspective view of a portion of the agricultural implement according to another embodiment.

Before any embodiments are explained in detail, it is to be understood that the disclosure is not limited in its application to the details of construction and the arrangement of components set forth in the following description or illustrated in the following drawings. The disclosure is capable of other embodiments and of being practiced or of being carried out in various ways. Further embodiments of the invention may include any combination of features from one or more dependent claims, and such features may be incorporated, collectively or separately, into any independent claim.

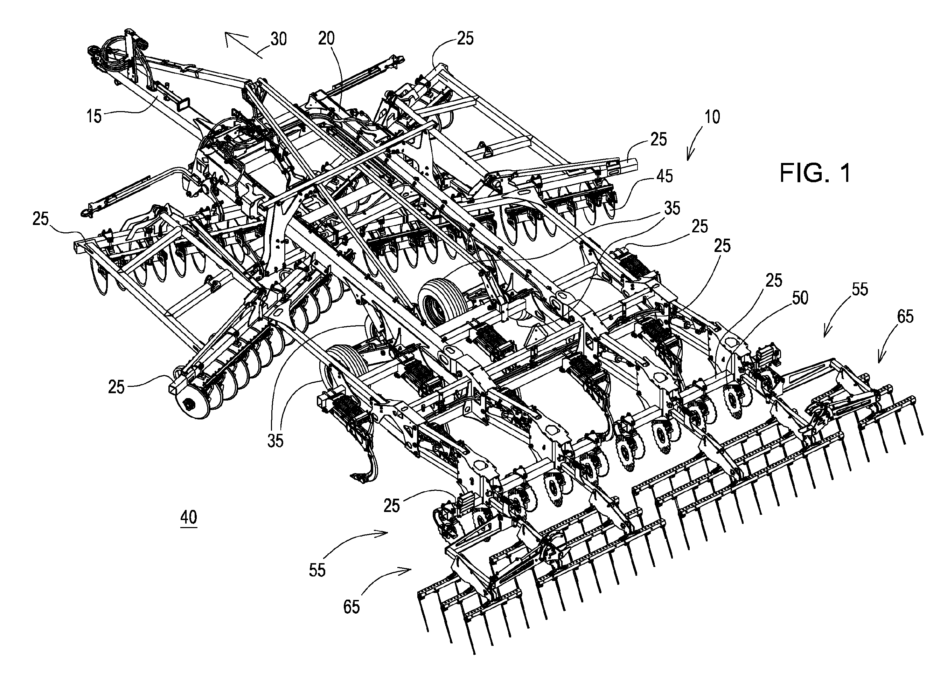

FIG. 1 illustrates an agricultural implement 10. The illustrated agricultural implement 10 comprises a coupling mechanism 15 for coupling to a vehicle (not shown).

A frame 20 comprising a plurality of tool tubes 25 is coupled to the coupling mechanism 15. The frame 20 extends rearwardly from the coupling mechanism 15 in a direction opposite of a direction of travel 30. A plurality of wheel assemblies 35 are coupled to the frame 20. The wheel assemblies 35 support the frame 20 above a surface 40.

A source of hydraulic pressure (not shown) may be coupled to the frame 20. A disk gang assembly 45 and a coulter disk gang assembly 50 may be coupled to the frame 20.

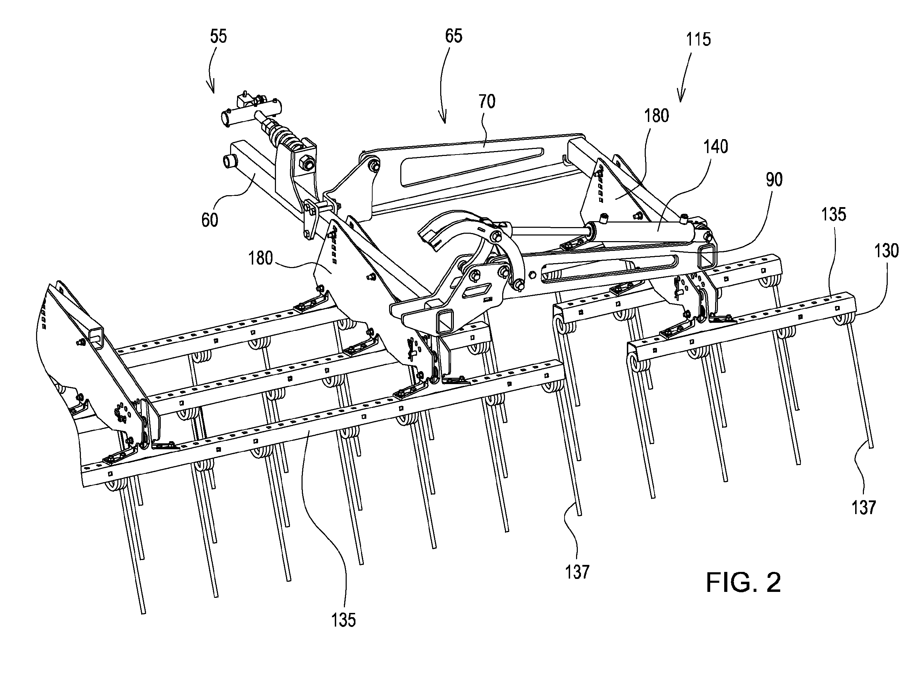

With reference to FIGS. 1-5, a drawbar apparatus 55 may be coupled to the frame 20. The illustrated drawbar apparatus 55 comprises a drawbar 60 (FIG. 2). The drawbar 60 is pivotally coupled to the frame 20 and extends from the frame 20 in a direction opposite of the direction of travel 30.

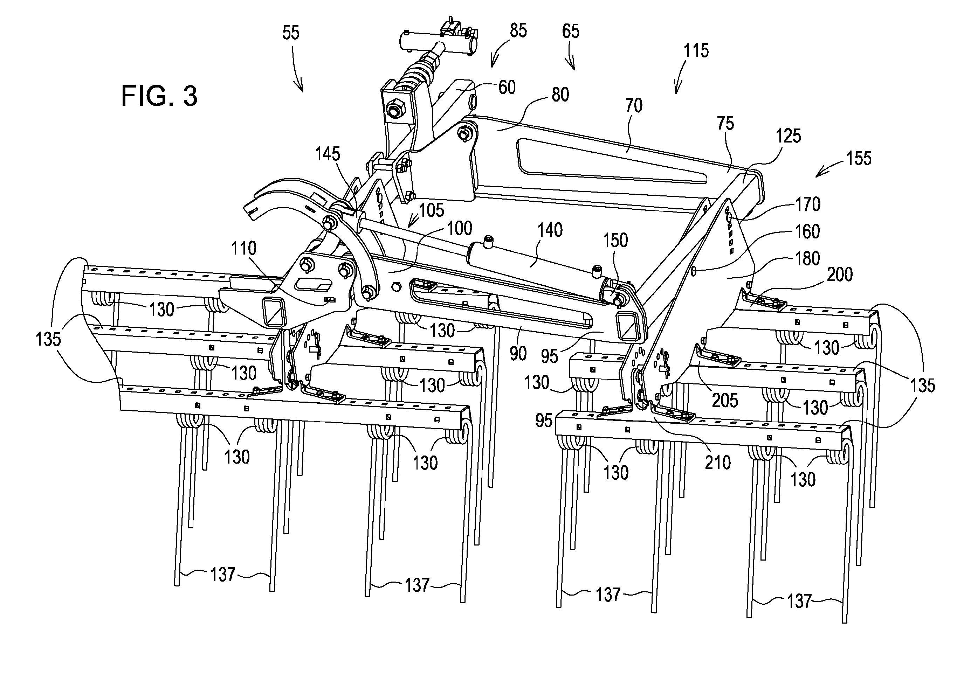

An earth-working tool attachment 65 may be coupled to the drawbar 60. With reference to FIG. 3, the illustrated earth-working tool attachment 65 comprises a first bracket 70. The first bracket 70 comprises a first portion 75 and a second portion 80. A first hinge 85 is coupled to the second portion 80 of the first bracket 70 and the drawbar 60.

The illustrated earth-working tool attachment 65 comprises a second bracket 90 spaced from the first bracket 70. The second bracket 90 comprises a first portion 95 and a second portion 100. A second hinge 105 is coupled to the second portion 100 of the second bracket 90 and the drawbar 60.

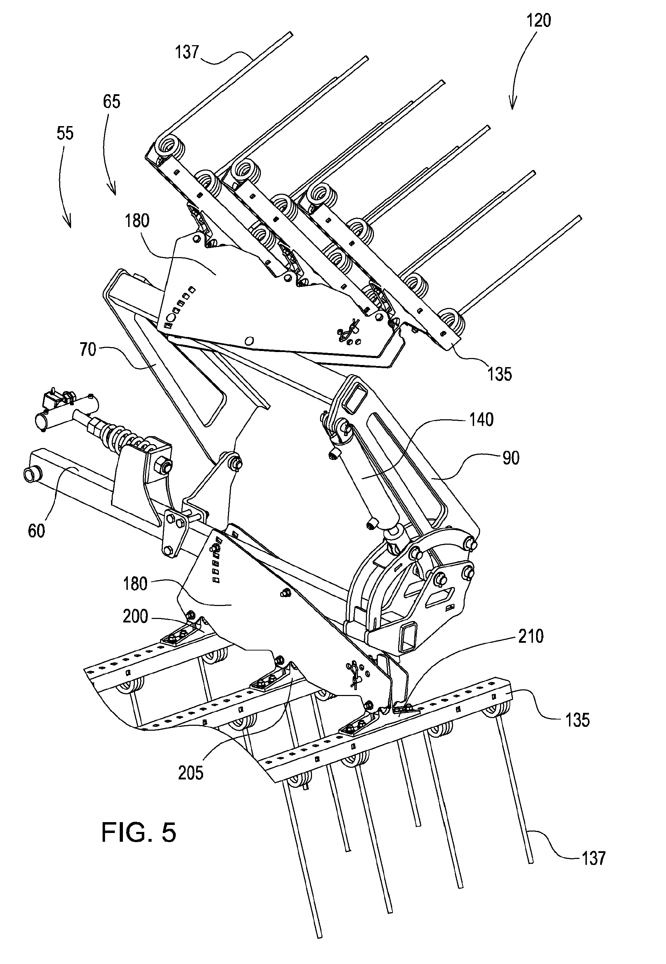

A stop 110 is coupled to the second hinge 105. The stop 110 is configured to limit the orientation of the earth-working tool attachment 65 in at least one of a first position 115 and a second position 120 (FIG. 5). With continued reference to FIG. 3, the illustrated stop 110 limits the orientation of the earth-working tool attachment 65 by limiting the orientation of the second hinge 105. Alternatively, the stop 110 may be coupled to the first hinge 85 and limit the orientation of the earth-working tool attachment 65 by limiting the orientation of the first hinge 85.

A tool support 125 is coupled to the first portion 75 of the first bracket 70 and the first portion 95 of the second bracket 90. In the illustrated embodiment, the tool support 125 is oriented generally parallel to the drawbar 60. An earth-working tool 130 (e.g., rolling basket, coil tine harrow, disk harrow, chain harrow, tine harrow) is coupled to the tool support 125. The illustrated earth-working tool 130 is a coil tine harrow 135 comprising a plurality of coil tines 137.

An extendable and retractable hydraulic cylinder 140 comprises a first end 145 and a second end 150. Illustratively, the first end 145 is pivotally coupled to the second hinge 105. The second end 150 is pivotally coupled to the first portion 95 of the second bracket 90. The extendable and retractable hydraulic cylinder 140 may be double acting. Alternatively, the first end 145 of the extendable and retractable hydraulic cylinder 140 may be pivotally coupled to the first hinge 85 and the second end 150 may be pivotally coupled to the first portion 75 of the first bracket 70 or the tool support 125.

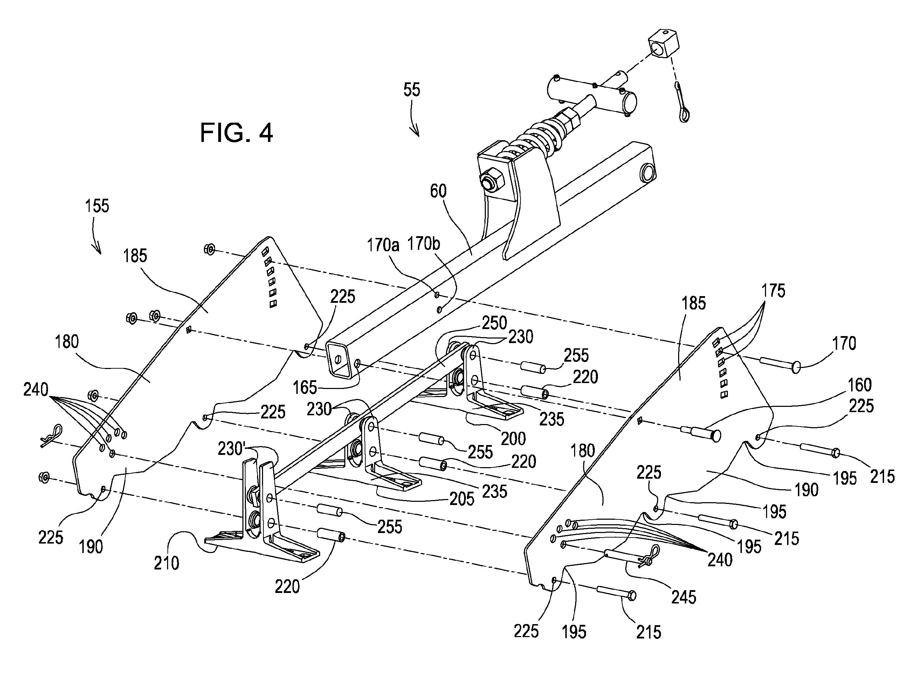

With reference to FIG. 4, an adjustable tine support assembly 155 may be coupled to the drawbar 60 by a fastener (e.g., bolt, pivot pin assembly) 160 extending through apertures 165 and a fastener (e.g., bolt, pivot pin assembly) 170 located forwardly of the fastener 160 and passing through sets of apertures 170a or 170b in the drawbar 60 and a selected aperture 175 that locks the adjustable tine support assembly 155 in the desired angular position relative to the drawbar 60. Referring to FIG. 3, the coil tine harrow 135 is carried by the adjustable tine support assembly 155.

With reference to FIG. 4, the adjustable tine support assembly 155 includes a pair of plates 180. An upper edge 185 of each plate 180 is generally straight, and a lower edge 190 includes notch locations 195 to accommodate pivoting of the coil tines 137 (FIG. 3) to a rearward tucked transport position. A first tine support bracket 200, a second tine support bracket 205, and a third tine support bracket 210 are pivotally mounted between the plates 180 adjacent the lower edge 190 by fasteners (e.g., bolts) 215 and bushings 220. The fasteners 215 extend through apertures 225 near the lower edge 190 of the plates 180 and through the bushings 220. The fastener 215 and bushing 220 combinations not only provide pivot surfaces for the first, second, and third support brackets 200, 205, 210, but also act to tie the lower edges 190 of the two plates 180, while the upper edges 185 are spaced solidly by the drawbar 60 and the fasteners 160, 170. A tight joint is formed with the drawbar 60 and structural strength is increased significantly so that fewer drawbars 60 for a given width of coil tine harrow 135 are required.

The first and second tine support brackets 200, 205 are generally identical and are preferably fabricated as castings having a clevis area or pair of transversely spaced upright legs 230 connected to lower transversely extending apertured attaching flanges 235. The third tine support bracket 210 is similar in construction to the first and second tine support brackets 200, 205 but includes longer transversely spaced upright legs 230', which project radially from the pivot area beyond sets of apertures 240 which receive fastener (e.g., pin) 245. The fastener 245 acts as a tine angle setting stop by limiting the pivoting of the first, second, and third support brackets 200, 205, 210 in the clockwise direction as viewed in FIG. 4. The first, second, and third support brackets 200, 205, 210 pivot clockwise until the transversely spaced upright legs 230' hit the fastener 245. The coil tines 137 freely rotate in the counter-clockwise direction to avoid tine damage if the agricultural implement 10 is backed up while the coil tines 137 are contacting the surface 40. The fastener 245 can also be used to secure the coil tines 137 in a retracted transport position when placed behind the transversely spaced upright legs 230' in the forwardmost (in the direction of travel 30) set of apertures 240.

A flat connecting link 250 of preselected thickness is pivotally connected between the transversely spaced upright legs 230, 230' to constrain the first, second, and third support brackets 200, 205, 210 for pivoting in unison about the fasteners 215 and bushings 220. A fastener (e.g., pin) 255 couples the first, second, and third support brackets 200, 205, 210 to the flat connecting link 250.

In operation, the coupling mechanism 15 of the agricultural implement 10 is coupled to the vehicle and pulled in the direction of travel 30. The tool support 125 of the earth-working tool attachment 65 is configured to fold substantially (plus or minus five degrees) up to one-hundred forty-three degrees relative to the drawbar 60 from the first position 115 to the second position 120. The second position 120 enables the agricultural implement 10 to obtain an overall narrower width that is conducive for transport.

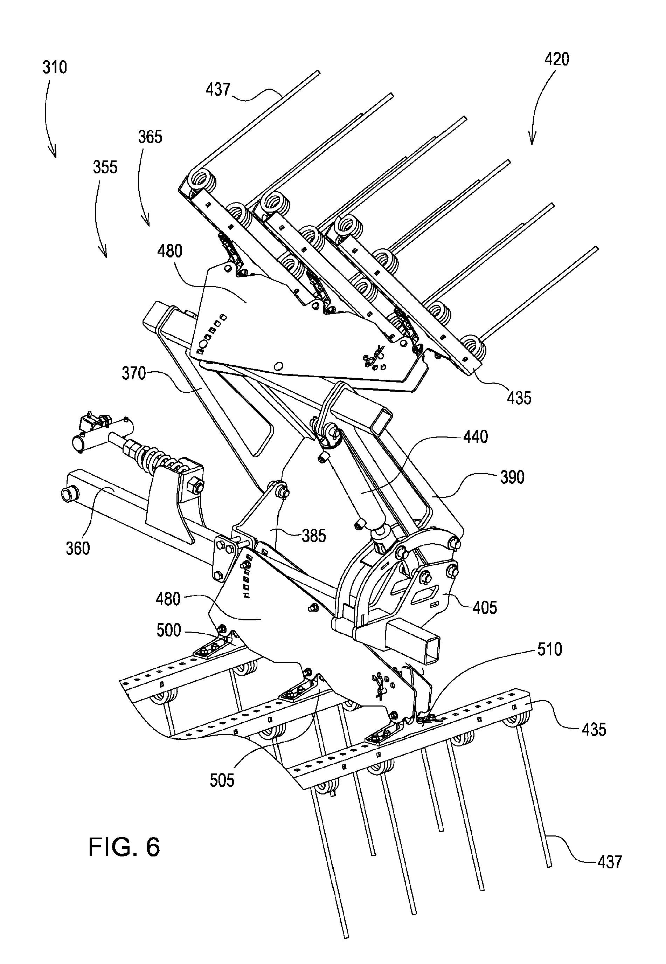

FIG. 6 illustrates an agricultural implement 310 according to yet another embodiment. The agricultural implement 310 includes features similar to the agricultural implement 10 of FIGS. 1-5 and therefore, like components have been given like reference numbers plus 300 and only differences between the agricultural implements 10 and 310 will be discussed in detail below.

A drawbar apparatus 355 comprises a drawbar 360. An earth-working tool attachment 365 may be coupled to the drawbar 360. The illustrated earth-working tool attachment 365 comprises a first bracket 370. A first hinge 385 is coupled to the first bracket 370 and the drawbar 360.

The illustrated earth-working tool attachment 365 comprises a second bracket 390 spaced more closely to the first bracket 370 than in the first embodiment. A second hinge 405 is coupled to the second bracket 390 and the drawbar 360.

Various features are set forth in the following claims.

## Claims

1. Drawbar apparatus (55) for coupling an earth-working tool (130) to a frame (20) of an agricultural implement (10), comprising a drawbar (60) pivotally coupable to a frame (20) and an earth-working tool attachment (65), the earth-working tool attachment (65) comprising a first bracket (70) comprising a first portion (75) and a second portion (80), the second portion (80) pivotally coupled to the drawbar (60); a second bracket (90) comprising a first portion (95) and a second portion (100), the second portion (100) pivotally coupled to the drawbar (60); and a tool support (125) coupled to the first portion (75) of the first bracket (70) and the first portion (95) of the second bracket (90); wherein the tool support (125) is configured to fold relative to the drawbar (60).

2. The drawbar apparatus (55) of claim 1, further comprising a first hinge (85) coupled to the second portion (80) of the first bracket (70) and the drawbar (60) and a second hinge (105) coupled to the second portion (100) of the second bracket (90) and the drawbar (60).

3. The drawbar apparatus (55) of claim 2, further comprising a stop (110) coupled to at least one of the first hinge (85) and the second hinge (105), the stop (110) configured to limit the orientation of at least one of the first hinge (85) and the second hinge (105).

4. The drawbar apparatus (55) of claim 2, further comprising an extendable and retractable hydraulic cylinder (140) comprising a first end (145) pivotally coupled to at least one of the first hinge (85) and the second hinge (105) and a second end (150) pivotally coupled to at least one of the tool support (125), the first bracket (70), and the second bracket (90).

5. The drawbar apparatus (55) of claim 1, further comprising an adjustable tine support assembly (155) coupled to at least one of the drawbar (60) and the tool support (125).

6. The drawbar apparatus (55) of claim 5, further comprising a coil tine harrow (135) coupled to the adjustable tine support assembly (155).

7. The drawbar apparatus (55) of claim 1, further comprising a coil tine harrow (135) coupled to at least one of the drawbar (60) and the tool support (125).

8. The drawbar apparatus (55) of claim 1, wherein the tool support (125) folds substantially up to 143 degrees, relative to the drawbar (60), from a first position to a second position.

9. An agricultural implement (10) comprising: a coupling mechanism (15) for coupling to a vehicle; a frame (20) coupled to the coupling mechanism (15) and extending from the coupling mechanism (15) and adapted to be pulled by the vehicle; a plurality of wheel assemblies (35) coupled to the frame (20), the wheel assemblies (35) supporting the frame (20) above a surface; **characterized in** further comprising a drawbar apparatus (55) according to one of claims 1 to 8 with the drawbar pivotally (60) coupled to the frame (20).

10. The agricultural implement of claim 9, further comprising a disk gang (45) assembly coupled to the frame (20).
